# EUROPEAN PATENT APPLICATION

(11) **EP 3 971 555 A1**
(43) Date of publication of application: **23.03.2022**
(21) Application number: 20196358.4
(22) Date of filing: 16.09.2020
(51) Int. Cl.: G01N 21/84, G01N 21/95

(54) **METHOD OF PERFORMING METROLOGY**

(71) Applicant: ASML Netherlands B.V., 5500 AH Veldhoven (NL)
(72) Inventor: KURGANOVA, Evgenia, 5500 AH Veldhoven (NL); SCOTUZZI, Marijke, 5500 AH Veldhoven (NL); FARAMARZI, Vina, 5500 AH Veldhoven (NL); VAN DEN BROEK, Bastiaan, Maurice, 5500 AH Veldhoven (NL)
(74) Representative: ASML Netherlands B.V.

(57) **Abstract**

Methods of performing metrology are disclosed. In one arrangement a substrate is provided that has a layer formed on the substrate. The layer comprises a two-dimensional material. A target portion of the layer is illuminated with an incoherent beam of radiation and radiation redirected by the target portion of the layer is detected to obtain measurement data. The measurement data is processed to obtain metrology information about the target portion of the layer. The illuminating, detecting and processing are performed for plural different target portions of the layer to obtain metrology information for the plural target portions of the layer.

## Description

### FIELD

The present invention relates to performing metrology on layers comprising two-dimensional material.

### BACKGROUND

There is considerable interest in using two-dimensional materials to form device structures such as circuit elements as part of semiconductor manufacturing processes. Various deposition techniques exist for fabricating two-dimensional materials. Such deposition techniques include chemical vapor deposition (CVD) and atomic layer deposition (ALD). For quality and/or process control during manufacture of device structures, it is important to be able to assess the quality of deposited two-dimensional material and/or structures or patterns formed from the two-dimensional material. It has proven difficult to achieve this with an optimal balance of precision and speed.

### SUMMARY

It is an object of embodiments of the present disclosure to improve assessment of two-dimensional materials.

According to an aspect of the invention, there is provided a method of performing metrology, comprising: providing a substrate having a layer formed on the substrate, the layer comprising a two-dimensional material; illuminating a target portion of the layer with an incoherent beam of radiation and detecting radiation redirected by the target portion of the layer to obtain measurement data; and processing the measurement data to obtain metrology information about the target portion of the layer, wherein: the illuminating, detecting and processing are performed for plural different target portions of the layer to obtain metrology information for the plural target portions of the layer.

A non-destructive method is thus provided that allows metrology information about a two-dimensional material to be obtained quickly and efficiently over a large area. The use of incoherent radiation allows the technique to be implemented at low cost and high speed. The approach can also conveniently be implemented using optical apparatus similar to that used for performing conventional metrology processes in the context of semiconductor lithography.

In an embodiment, the measurement data comprises data derived from a detected image formed in a dark field imaging mode. The inventors have found dark field imaging to be particularly sensitive to defects of interest, such as grain boundaries. In dark field imaging, if no grain boundary or defect is present the ideal flat crystal should mostly appear dark (with only the edges scattering light). A discontinuity of any kind (e.g. surface defect, grain boundary, surface topology) will act as a scattering site and thereby contribute to a detectable signal. Grain boundaries are of particular interest because they are expected to decrease performance of devices formed from two-dimensional materials. Grain boundaries represent imperfections in the crystal structure and therefore contribute to scattering of charge carriers. Scattering of charge carriers dissipates energy and/or reduces charge carrier mobility, both of which are typically detrimental to device performance.

In an embodiment, the measurement data comprises data derived from a detected distribution of radiation in a pupil plane. This detection mode has been found to be highly sensitive to small signals and can extract information about defects such as grain boundaries even with the large background signal expected in bright field imaging.

According to an aspect of the invention, there is provided a method of performing metrology, comprising: providing a substrate having a layer formed on the substrate, the layer comprising a two-dimensional material; performing dark field holographic microscopy on a target portion of the layer to obtain measurement data; and processing the measurement data to obtain metrology information about the target portion of the layer, wherein: the dark field holographic microscopy and processing are performed for plural different target portions of the layer to obtain metrology information for the plural target portions of the layer.

A method is thus provided that allows metrology information about a two-dimensional material to be obtained with high sensitivity and high speed. The benefits of dark field imaging discussed above are combined with the ability of holographic microscopy to distinguish phase information to provide high sensitivity and accuracy.

In an embodiment, at least a majority of the plural target portions are positioned within a distance from a radial periphery of the substrate nearest to the target portion that is less than 20% of an average separation between the radial periphery and a center of mass of the substrate. Providing target portions preferentially towards the radial periphery of the substrate ensures that the target portions sample available information about the spatial distribution of defects efficiently, particularly in the case where the defects of interest are grain boundaries.

In an embodiment, the target portions vary in size and/or shape as a function of position on the substrate. The variation in size and/or shape may, for example, be selected to take account of an expected defect distribution in the layer. This may facilitate finding of an optimum balance between quality and speed of the measurement process being used.

According to an aspect of the invention, there is provided a method of training a machine learning model, comprising: providing a substrate having a layer formed on the substrate, the layer comprising a two-dimensional material; performing a first measurement process on a target portion of the layer to obtain first measurement data; and performing a second measurement process on the target portion of the layer to obtain second measurement data, wherein: the first and second measurement processes are performed for multiple different target portions of the layer to obtain a training dataset; and using the obtained training dataset to train a machine learning model such that the trained machine learning model is capable of deriving metrology information about a new target portion of a layer comprising a two-dimensional material from measurement data obtained by performing the first measurement process on the new target portion.

Thus, a method is provided for training a machine learning model. The trained machine learning model makes it possible to obtain more information from measurement data about a new target portion of a layer that is obtained using the first measurement process, without having to additionally perform the second measurement process (which may be a relatively expensive and/or slow technique, such as electron microscopy or second-harmonic imaging microscopy).

In an embodiment, the layer comprising the two-dimensional material used to obtain the training dataset is supported on a non-planar support surface, a surface topography of the non-planar support surface being configured to provide a predetermined defect distribution in the layer. This approach can ensure that the training dataset trains the machine learning model effectively over a desired range of defect distributions without the training set having to be excessively large.

In an embodiment, a method for providing a layer comprising a two-dimensional material on a substrate, comprising: forming a layer comprising a two-dimensional material on a substrate using a formation process; performing metrology on the layer comprising the two-dimensional material using a method of performing metrology according to any of the embodiments disclosed herein; and modifying one or more process parameters of the formation process based on the obtained metrology information and repeating the formation process to form a layer comprising a two-dimensional material on a new substrate. Thus, any of the methods of performing metrology of embodiments of the disclosure may be used to support control of a manufacturing process for producing layers comprising two-dimensional materials (patterned or unpatterned). Layers of more consistent and/or higher quality can therefore be produced, which may improve overall device manufacturing efficiency and/or yield.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figure 1 depicts a lithographic apparatus;
Figure 2 depicts a lithographic cell or cluster;
Figure 3 depicts a scatterometer used in metrology;
Figure 4 depicts a framework for a method of performing metrology using an incoherent beam of radiation;
Figure 5 is a schematic side sectional view of a substrate having a layer comprising a two-dimensional material formed on the substrate;
Figure 6 depicts a framework for a method of performing metrology using dark field holographic microscopy;
Figure 7 depicts an example arrangement for implementing dark field holographic microscopy;
Figure 8 depicts a framework for a method of training a machine learning model to derive metrology information;
Figure 9 is a schematic top view of a support surface having training zones of different composition.;
Figure 10 depicts a framework for a method of providing a layer comprising a two-dimensional material on a substrate.

### DETAILED DESCRIPTION OF EXEMPLARY EMBODIMENTS

This specification discloses one or more embodiments that incorporate the features of this invention. The disclosed embodiment(s) merely exemplify the invention. The scope of the invention is not limited to the disclosed embodiment(s). The invention is defined by the claims appended hereto.

The embodiment(s) described, and references in the specification to "one embodiment," "an embodiment," "an example embodiment," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is understood that it is within the knowledge of one skilled in the art to effect such feature, structure, or characteristic in connection with other embodiments whether or not explicitly described.

Before describing such embodiments in more detail, however, it is instructive to present an example environment in which embodiments of the present disclosure may be implemented.

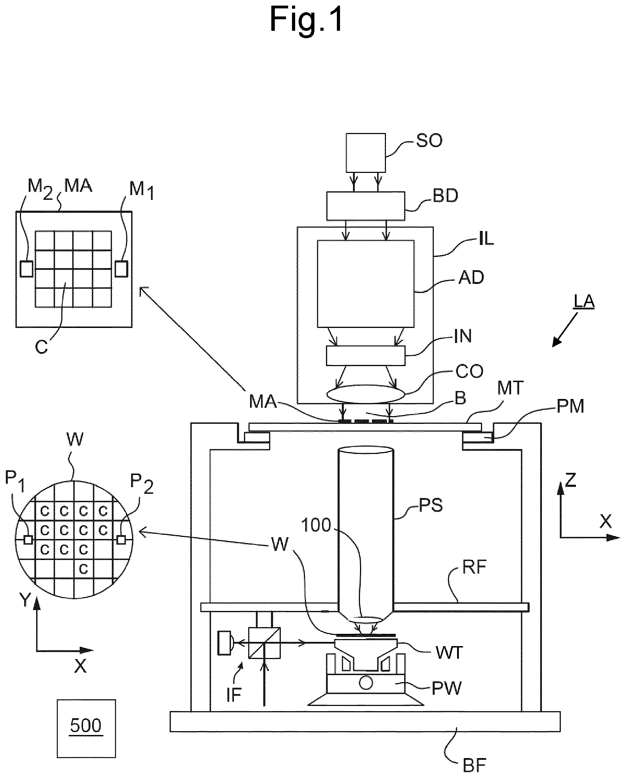

Figure 1 schematically depicts a lithographic apparatus LA. The apparatus includes an illumination system (illuminator) IL configured to condition a radiation beam B (e.g., UV radiation or DUV radiation), a support structure (e.g., a mask table) MT constructed to support a patterning device (e.g., a mask) MA and connected to a first positioner PM configured to accurately position the patterning device in accordance with certain parameters, a substrate table (e.g., a wafer table) WT constructed to hold a substrate (e.g., a resist coated wafer) W and connected to a second positioner PW configured to accurately position the substrate in accordance with certain parameters, and a projection system (e.g., a refractive projection lens system) PS configured to project a pattern imparted to the radiation beam B by patterning device MA onto a target portion C (e.g., comprising one or more dies) of the substrate W.

The illumination system may include various types of optical components, such as refractive, reflective, magnetic, electromagnetic, electrostatic, or other types of optical components, or any combination thereof, for directing, shaping, or controlling radiation.

The support structure supports, i.e., bears the weight of, the patterning device. It holds the patterning device in a manner that depends on the orientation of the patterning device, the design of the lithographic apparatus, and other conditions, such as for example whether or not the patterning device is held in a vacuum environment. The support structure can use mechanical, vacuum, electrostatic or other clamping techniques to hold the patterning device. The support structure may be a frame or a table, for example, which may be fixed or movable as required. The support structure may ensure that the patterning device is at a desired position, for example with respect to the projection system. Any use of the terms "reticle" or "mask" herein may be considered synonymous with the more general term "patterning device."

The term "patterning device" used herein should be broadly interpreted as referring to any device that can be used to impart a radiation beam with a pattern in its cross-section such as to create a pattern in a target portion of the substrate. It should be noted that the pattern imparted to the radiation beam may not exactly correspond to the desired pattern in the target portion of the substrate, for example if the pattern includes phase-shifting features or so called assist features. Generally, the pattern imparted to the radiation beam will correspond to a particular functional layer in a device being created in the target portion, such as an integrated circuit.

The patterning device may be transmissive or reflective. Examples of patterning devices include masks, programmable mirror arrays, and programmable LCD panels. Masks are well known in lithography, and include mask types such as binary, alternating phase-shift, and attenuated phase-shift, as well as various hybrid mask types. An example of a programmable mirror array employs a matrix arrangement of small mirrors, each of which can be individually tilted so as to reflect an incoming radiation beam in different directions. The tilted mirrors impart a pattern in a radiation beam, which is reflected by the mirror matrix.

The term "projection system" used herein should be broadly interpreted as encompassing various types of projection system, including refractive, reflective, catadioptric, magnetic, electromagnetic and electrostatic optical systems, or any combination thereof, as appropriate for the exposure radiation being used, or for other factors such as the use of an immersion liquid or the use of a vacuum. Any use of the term "projection lens" herein may be considered as synonymous with the more general term "projection system."

In this embodiment, for example, the apparatus is of a transmissive type (e.g., employing a transmissive mask). Alternatively, the apparatus may be of a reflective type (e.g., employing a programmable mirror array of a type as referred to above, or employing a reflective mask).

The lithographic apparatus may be of a type having two (dual stage) or more substrate tables and, for example, two or more mask tables. In such "multiple stage" machines the additional tables may be used in parallel, or preparatory steps may be carried out on one or more tables while one or more other tables are being used for exposure.

The lithographic apparatus may also be of a type wherein at least a portion of the substrate may be covered by a liquid having a relatively high refractive index, e.g., water, so as to fill a space between the projection system and the substrate. An immersion liquid may also be applied to other spaces in the lithographic apparatus, for example between the mask and the projection system. Immersion techniques are well known in the art for increasing the numerical aperture of projection systems. The term "immersion" as used herein does not mean that a structure, such as a substrate, must be submerged in liquid, but rather only means that liquid is located between the projection system and the substrate during exposure.

Referring to Figure 1, the illuminator IL receives a radiation beam from a radiation source SO. The source and the lithographic apparatus may be separate entities, for example when the source is an excimer laser. In such cases, the source is not considered to form part of the lithographic apparatus and the radiation beam is passed from the source SO to the illuminator IL with the aid of a beam delivery system BD comprising, for example, suitable directing mirrors and/or a beam expander. In other cases the source may be an integral part of the lithographic apparatus, for example when the source is a mercury lamp. The source SO and the illuminator IL, together with the beam delivery system BD if required, may be referred to as a radiation system.

The illuminator IL may comprise an adjuster AD for adjusting the angular intensity distribution of the radiation beam. Generally, at least the outer and/or inner radial extent (which are commonly referred to as σ-outer and σ-inner, respectively) of the intensity distribution in a pupil plane of the illuminator can be adjusted. In addition, the illuminator IL may comprise various other components, such as an integrator IN and a condenser CO. The illuminator may be used to condition the radiation beam to have a desired uniformity and intensity distribution in its cross section.

The radiation beam B is incident on the patterning device (e.g., mask MA), which is held on the support structure (e.g., mask table MT), and is patterned by the patterning device. Having traversed the mask MA, the radiation beam B passes through the projection system PS, which focuses the beam onto a target portion C of the substrate W. With the aid of the second positioner PW and position sensor IF (e.g., an interferometric device, linear encoder, 2-D encoder or capacitive sensor), the substrate table WT can be moved accurately, e.g., so as to position different target portions C in the path of the radiation beam B. Similarly, the first positioner PM and another position sensor (which is not explicitly depicted in Figure 1) can be used to accurately position the mask MA with respect to the path of the radiation beam B, e.g., after mechanical retrieval from a mask library, or during a scan. In general, movement of the mask table MT may be realized with the aid of a long-stroke module (coarse positioning) and a short-stroke module (fine positioning), which form part of the first positioner PM. Similarly, movement of the substrate table WT may be realized using a long-stroke module and a short-stroke module, which form part of the second positioner PW. In the case of a stepper (as opposed to a scanner) the mask table MT may be connected to a short-stroke actuator only, or may be fixed. Mask MA and substrate W may be aligned using mask alignment marks M1, M2 and substrate alignment marks PI, P2. Although the substrate alignment marks as illustrated occupy dedicated target portions, they may be located in spaces between target portions (these are known as scribe-lane alignment marks). Similarly, in situations in which more than one die is provided on the mask MA, the mask alignment marks may be located between the dies.

The depicted apparatus could be used in at least one of the following modes:
1. In step mode, the mask table MT and the substrate table WT are kept essentially stationary, while an entire pattern imparted to the radiation beam is projected onto a target portion C at one time (i.e., a single static exposure). The substrate table WT is then shifted in the X and/or Y direction so that a different target portion C can be exposed. In step mode, the maximum size of the exposure field limits the size of the target portion C imaged in a single static exposure.
2. In scan mode, the mask table MT and the substrate table WT are scanned synchronously while a pattern imparted to the radiation beam is projected onto a target portion C (i.e., a single dynamic exposure). The velocity and direction of the substrate table WT relative to the mask table MT may be determined by the (de-)magnification and image reversal characteristics of the projection system PS. In scan mode, the maximum size of the exposure field limits the width (in the non-scanning direction) of the target portion in a single dynamic exposure, whereas the length of the scanning motion determines the height (in the scanning direction) of the target portion.
3. In another mode, the mask table MT is kept essentially stationary holding a programmable patterning device, and the substrate table WT is moved or scanned while a pattern imparted to the radiation beam is projected onto a target portion C. In this mode, generally a pulsed radiation source is employed and the programmable patterning device is updated as required after each movement of the substrate table WT or in between successive radiation pulses during a scan. This mode of operation can be readily applied to maskless lithography that utilizes programmable patterning device, such as a programmable mirror array of a type as referred to above.

Combinations and/or variations on the above described modes of use or entirely different modes of use may also be employed.

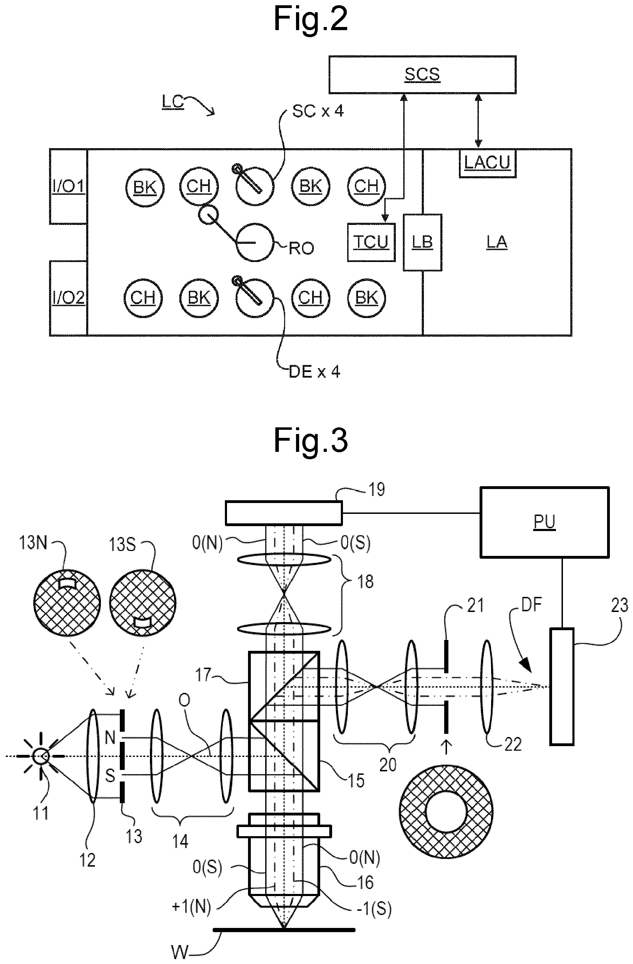

As shown in Figure 2 the lithographic apparatus LA forms part of a lithographic cell LC, also sometimes referred to as a lithocell or cluster, which also includes apparatus to perform pre- and post-exposure processes on a substrate. Conventionally these include spin coaters SC to deposit resist layers, developers DE to develop exposed resist, chill plates CH and bake plates BK. A substrate handler, or robot, RO picks up substrates from input/output ports I/O1, I/O2, moves them between the different process apparatus and delivers then to the loading bay LB of the lithographic apparatus. These devices, which are often collectively referred to as the track, are under the control of a track control unit TCU that is itself controlled by the supervisory control system SCS, which also controls the lithographic apparatus via lithography control unit LACU. Thus, the different apparatus can be operated to maximize throughput and processing efficiency.

In order that the substrates that are exposed by the lithographic apparatus are exposed correctly and consistently, it is desirable to inspect exposed substrates to measure properties such as overlay errors between subsequent layers, line thicknesses, critical dimensions (CD), etc. If errors are detected, adjustments, for example, can be made to exposures of subsequent substrates, especially if the inspection can be done soon and fast enough that other substrates of the same batch are still to be exposed. Also, already exposed substrates may be stripped and reworked to improve yield, or possibly be discarded, thereby avoiding performing exposures on substrates that are known to be faulty. In a case where only some target portions of a substrate are faulty, further exposures can be performed only on those target portions that are deemed to be non-faulty.

An inspection apparatus, which may also be referred to as a metrology apparatus, is used to determine the properties of the substrates, and in particular, how the properties of different substrates or different layers of the same substrate vary from layer to layer. The inspection apparatus may be integrated into the lithographic apparatus LA or the lithocell LC or may be a stand-alone device. To enable most rapid measurements, it is desirable that the inspection apparatus measure properties in the exposed resist layer immediately after the exposure. However, the latent image in the resist has a very low contrast, as in there is only a very small difference in refractive index between the parts of the resist which have been exposed to radiation and those which have not-and not all inspection apparatus have sufficient sensitivity to make useful measurements of the latent image. Therefore measurements may be taken after the post-exposure bake step (PEB) that is customarily the first step carried out on exposed substrates and increases the contrast between exposed and unexposed parts of the resist. At this stage, the image in the resist may be referred to as semi-latent. It is also possible to make measurements of the developed resist image, at which point either the exposed or unexposed parts of the resist have been removed, or after a pattern transfer step such as etching. The latter possibility limits the possibilities for rework of faulty substrates but may still provide useful information.

Figure 3 is a schematic diagram of an optical apparatus in the form of a scatterometer suitable for performing metrology in conjunction with the lithocell of Figure 2. The apparatus may be used for measuring critical dimensions of features formed by lithography, measuring overlay between layers and the like. A product feature or dedicated metrology target is formed on substrate W. The apparatus may be a stand-alone device or incorporated in either the lithographic apparatus LA, e.g., at the measurement station, or the lithographic cell LC. An optical axis, which has several branches throughout the apparatus, is represented by a dotted line O. In this apparatus, light emitted by source 11 is directed onto substrate W via a beam splitter 15 by an optical system comprising lenses 12, 14 and objective lens 16. These lenses are arranged in a double sequence of a 4F arrangement. A different lens arrangement can be used, provided that it still provides an image of the source on the substrate, and simultaneously allows for access of an intermediate pupil-plane for spatial-frequency filtering. Therefore, the angular range at which the radiation is incident on the substrate can be selected by defining a spatial intensity distribution in a plane that presents the spatial spectrum of the substrate plane, here referred to as a (conjugate) pupil plane. In particular, this can be done by inserting an aperture plate 13 of suitable form between lenses 12 and 14, in a plane which is a back-projected image of the objective lens pupil plane. For example, as illustrated, aperture plate 13 can take different forms, two of which are labeled 13N and 13S, allowing different illumination modes to be selected. The illumination system in the illustrated example forms an off-axis illumination mode. In the first illumination mode, aperture plate 13N provides off-axis from a direction designated, for the sake of description only, as 'north'. In a second illumination mode, aperture plate 13S is used to provide similar illumination, but from an opposite direction, labeled 'south'. Other modes of illumination are possible by using different apertures. The rest of the pupil plane is desirably dark as any unnecessary light outside the desired illumination mode will interfere with the desired measurement signals.

At least the 0th and one of the -1 and +1 orders diffracted by the target on substrate W are collected by objective lens 16 and directed back through beam splitter 15. A second beam splitter 17 divides the diffracted beams into two measurement branches. In a first measurement branch, optical system 18 forms a diffraction spectrum (pupil plane image) of the target on first sensor 19 (e.g., a CCD or CMOS sensor) using the zeroth and first order diffractive beams. Each diffraction order hits a different point on the sensor, so that image processing can compare and contrast orders. The pupil plane image captured by sensor 19 can be used for focusing the metrology apparatus and/or normalizing intensity measurements of the first order beam. The pupil plane image can be used for many measurement purposes such as reconstruction.

In the second measurement branch, optical system 20, 22 forms an image of the target on the substrate W on sensor 23 (e.g., a CCD or CMOS sensor). In the second measurement branch, an aperture stop 21 is provided in a plane that is conjugate to the pupil-plane. Aperture stop 21 functions to block the zeroth order diffracted beam so that the image of the target formed on sensor 23 is formed only from the -1 or +1 first order beam. The image detected by sensor 23 is thus referred to as a 'dark-field' image. Note that the term 'image' is used here in a broad sense. An image of the grating lines as such will not be formed, if only one of the -1 and +1 orders is present.

The images captured by sensors 19 and 23 are output to image processor and controller PU, the function of which will depend on the particular type of measurements being performed.

Examples of scatterometers and techniques can be found in patent applications US 2006/066855 A1, WO 2009/078708, WO 2009/106279, and US 2011/0027704 A, which are all incorporated by reference herein in their entireties.

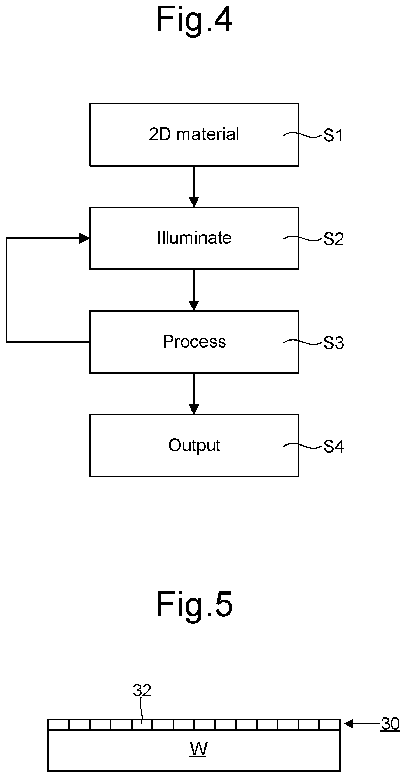

Figure 4 depicts a framework for a method of performing metrology. In step S1, a substrate W is provided having a layer 30 formed on the substrate W, as depicted in Figure 5. The layer 30 comprises, consists essentially of, or consists of, a two-dimensional material. A two-dimensional material is a material that shows significant anisotropy of properties in lateral directions within a plane of the material compared to the direction perpendicular to the plane of the material. A class of two-dimensional materials are sometimes referred to as single-layer materials and may comprise crystalline materials consisting of a single layer of atoms or a small number of single layers of atoms on top of each other. In some embodiments, the two-dimensional material comprises one or more of the following: graphene, hexagonal boron nitride (hBN), and transition metal dichalcogenides (TMD). The layer 30 may be nominally uniform (e.g. unpatterned) over a substrate W or selected region of the substrate W. Alternatively, the layer 30 may be patterned, for example to define features relevant for manufacturing a functional device incorporating the two-dimensional material.

In some embodiments, the method comprises a step S2 of illuminating a target portion 32 of the layer 30 with an incoherent beam of radiation. The step S2 further comprises detecting radiation redirected (e.g. scattered) by the target portion 32 of the layer 30 to obtain measurement data. The illumination may be performed using radiation having a wavelength in the range 10nm-1000nm, for example between 400nm and 900nm. In an embodiment, the method is implemented using an optical apparatus of the type described above with reference to Figure 3. The illumination in this case would be provided by the source 11 and the optics between the source 11 and the substrate W.

In some embodiments, the method comprises a step S3 of processing the measurement data obtained in step S2 to obtain metrology information about the target portion 32 of the layer 30.

In some embodiments, the method comprises performing steps S2 and S3 for plural different target portions 32 to obtain metrology information for the plural target portions of the layer 30. The metrology information for the plural target portions may be used to construct a map of metrology information over a region of the substrate W covered by the plural portions 32 of the layer 30 (e.g. by stitching together in software information from each of the target portions 32). The map of metrology information may be referred to as a fingerprint.

The method may comprise a final step S4 of outputting the metrology information, for example as an output data stream (e.g. for use as feedback to manufacturing processes) or as information displayed on a screen.

In an embodiment, the measurement data comprises data derived from a detected image formed in a dark field imaging mode. The detected image may, for example, be obtained using the sensor 23 in the optical apparatus of Figure 3. The aperture stop 21 provides the dark field imaging mode by preventing zeroth order scattered radiation from reaching the sensor 23. Image processing techniques may be used to transform the detected dark field image into a pattern representing a defect distribution, such as a pattern showing locations of grain boundaries or a pattern showing a spatial variation in grain boundary density over the substrate W. The image processing techniques may include use of pattern recognition algorithms. Algorithms for removing or reducing unwanted noise coming from optical elements and/or sensor imperfections can also be used.

In an embodiment, the measurement data comprises data derived from a detected distribution of radiation in a pupil plane. The detected distribution of radiation in a pupil plane may, for example, be obtained using the sensor 19 in the optical apparatus of Figure 3. Optical system 18 is configured to form a pupil plane image of the target on the sensor 19.

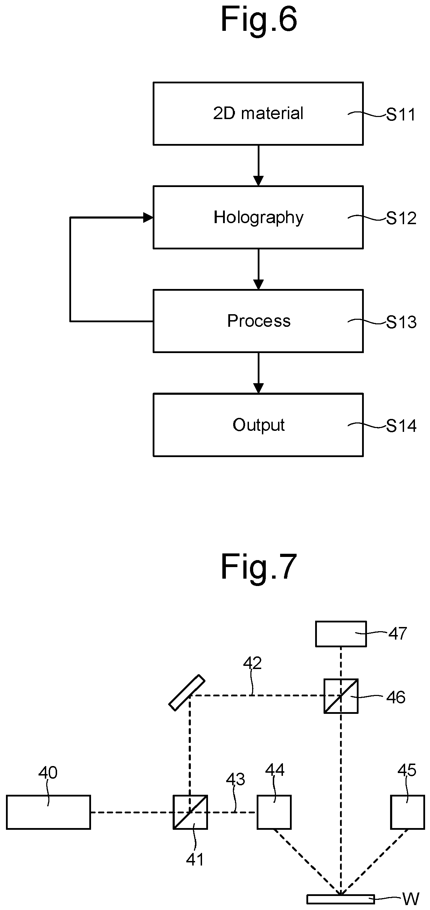

Figure 6 depicts an alternative framework for a method of performing metrology. The method comprises a step S11 of providing a substrate W having a layer 30 formed on the substrate, as depicted in Figure 5. The layer 30 may take any of the forms described above with reference to Figures 4 and 5.

In some embodiments, the method comprises a step S12 of performing dark field holographic microscopy on a target portion 32 of the layer 30 to obtain measurement data. The holographic microscopy may be performed using radiation having a wavelength in the range 10nm-1000nm, for example between 400nm and 900nm. Unlike the embodiments described above with reference to Figures 4 and 5, the methods according to the present embodiment require illumination with coherent radiation, for example from a laser. The skilled person would be aware of various ways of implementing dark field holographic microscopy. Figure 7 schematically depicts an example arrangement to illustrate the general principle. A source 40, for example a laser, provides a coherent beam of radiation. The beam of radiation is split by a first beam splitter 41 (e.g. a polarizing beam splitter) into a reference beam 42 and an illumination beam 43. The illumination beam 43 passes through an optical path length adjuster 44 before being directed onto the target portion 32 of the layer 30. Zeroth order scattered radiation is dumped into beam dump 45. Non-zeroth order scattered radiation is recombined with the reference beam 42 at a second beam splitter 46 (e.g. a polarizing beam splitter). A resulting interference pattern caused by interference between the scattered radiation and the reference beam 42 is detected by a sensor 47.

In some embodiments, the method comprises a step S13 of processing measurement data obtained from the dark field holographic microscopy of step S12 to obtain metrology information about the target portion 32 of the layer 30.

In some embodiments, the method comprises performing steps S12 and S13 for plural different target portions 32 to obtain metrology information for the plural target portions 32 of the layer 30. The metrology information for the plural target portions may be used to construct a map of metrology information over a region of the substrate covered by the plural portions 32 of the layer 30 (e.g. by stitching together in software information from each of the target portions 32). The map of metrology information may be referred to as a fingerprint.

The obtained metrology information may comprise information about a defect distribution in the layer 30. Embodiments of the disclosure are particularly applicable to the case where the defect distribution comprises information about a spatial distribution of grain boundaries. The information about the spatial distribution of grain boundaries may comprise information about a spatial distribution of a density of the grain boundaries. Various metrics may be used to quantify the density of grain boundaries. For example, a metric may be based on one or more of the following: a total length of grain boundary per unit area; a number of grain boundaries per unit area; and a proportion of the surface area occupied by grain boundary per unit area. Information about rate of change of the metric as a function of a position may be obtained to quantify a gradient of the distribution of grain boundaries (e.g. to obtain a rate of change with position of a grain boundary density). Grain boundaries in two-dimensional materials may disrupt properties of the two-dimensional that are relevant to functionality provided in a device being manufactured. For example, where the two-dimensional material forms part of an electrically functional element, increases in resistivity caused by grain boundaries may degrade device performance. The detection modes described above with reference to Figures 4-7 (based on scattering of incoherent radiation and dark field holographic microscopy) facilitate detection of grain boundaries with sufficient sensitivity to provide high quality information about the spatial distribution of the grain boundaries.

In some embodiments, the obtained information about defect distribution may comprise other information relevant to the quality of two-dimensional materials. The obtained information may comprise one or more of the following: variations in layer thickness; a distribution of islands of additional layers (e.g. regions where there is a 2^{nd} or 3^{rd} layer erroneously present on the 1^{st} layer); a distribution of defects in a pattern formed in the two-dimensional material (e.g. causing variations in critical dimension (CD) and/or in the quality of edges in the pattern); a distribution of layer delamination.

The inventors have found that the spatial density of grain boundaries and other defects often increases towards peripheral edges of the substrate W. This may occur, for example, due to radial distributions of substrate temperature that arise during deposition processes (such as chemical vapour deposition). Based on this insight, in some embodiments the target portions 32 are arranged so that at least a majority of the target portions 32 are positioned within a distance from a radial periphery of the substrate W nearest to the target portion 32 that is less than 20%, optionally less than 15%, optionally less than 10% of an average separation between the radial periphery and a center of mass of the substrate W. In some embodiments, the target portions 32 are all positioned closer to a nearest periphery of the substrate W than to the center of mass of the substrate W. In other embodiments, some target regions are positioned at or near to the center of mass of the substrate W to provide reference target regions. The substrate W may take various shapes in principle. In a case where the substrate W is a circular disk the center of mass would correspond to an axis of the disk and the radial periphery would be the circumferential edge of the disk. Providing target portions 32 preferentially towards the radial periphery of the substrate W in the manners described above ensures that the target portions 32 sample available information about the spatial distribution of defects efficiently, particularly in the case where the defects of interest are grain boundaries. The target portions 32 will, for example, typically contain more of the defects of interest than target portions 32 located closer to the center of mass of the substrate W. Fewer and/or smaller target portions 32 may therefore need to be measured in order to provide useful information about the defect distribution. The risk of taking time to measure target portions 32 that contain no (or insufficient) defects of interest may be reduced. In embodiments where reference target regions are also present at or near to the center of mass of the substrate W as mentioned above, useful comparisons may be between the reference target regions (which may typically contain no defects or a smaller number of defects) and target regions closer to the radial periphery (where more defects are expected). The reference target regions may, for example, provide information about a background signal that is unrelated to the presence of the defects of interest.

In some embodiments, the target portions 32 may be made to vary in size and/or shape as a function of position on the substrate W. The variation in size and/or shape may, for example, be selected taking into account an expected defect distribution in the layer 30. For example, where a higher density of defects is expected towards a radial periphery of the substrate W, an average surface area of the target portions 32 may be arranged to decrease monotonically as a function of increasing separation from a center of mass of the substrate W. In this way, variation in the amount of grain boundary between different target portions 32 may be reduced (e.g. by providing smaller target portions 32 in regions of high grain boundary density and vice versa), which may facilitate finding of an optimum balance between quality and speed of the measurement process being used (e.g. based on scattering of incoherent radiation or dark field holographic microscopy).

Various techniques may be used to perform the processing of the measurement data (e.g. in step S3 of Figure 4 or step S13 in Figure 6). A pattern recognition algorithm may be used to automatically identify features of interest. Segmentation algorithms may be used to classify different regions of the image according to a predetermined classification scheme, e.g. to identify pixels corresponding to grain boundaries and pixels that do not correspond to grain boundaries.

In embodiments where the defects of interest comprise grain boundaries, the processing of the measurement data may use a pattern recognition algorithm or a segmentation algorithm to determine one or more of the following: a spatial distribution of a density of grain boundaries; a spatial distribution of a gradient in a density of grain boundaries.

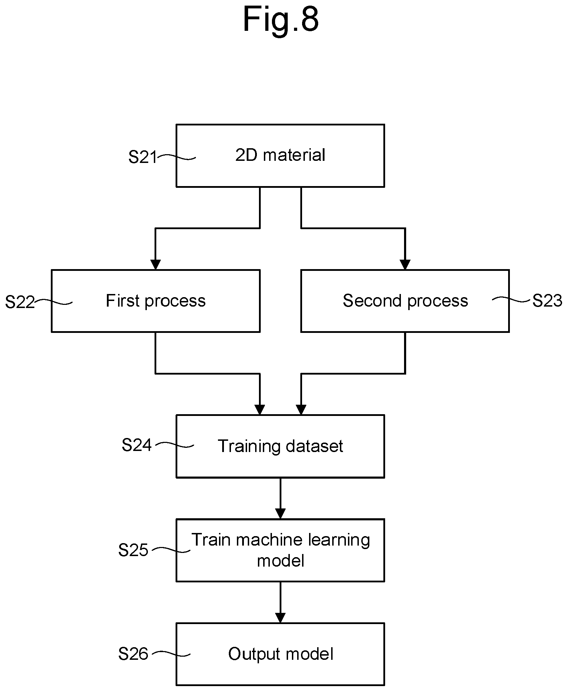

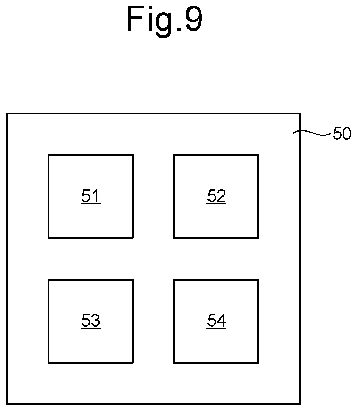

In some embodiments, the processing of the measurement data (e.g. in step S3 of Figure 4 or step S13 in Figure 6) comprises using a trained machine learning model to obtain the metrology information from the measurement data. Examples of how to train such a machine learning model are described below with reference to Figures 8 and 9.

Figure 8 depicts a framework for a method of training a machine learning model. The method comprises a step S21 of providing a substrate W having a layer 30 comprising a two-dimensional material on the substrate W, as depicted in Figure 5. The layer 30 may take any of the forms described above with reference to Figures 4-7.

In some embodiments, the method comprises a step S22 of performing a first measurement process on a target portion 32 of the layer 30 to obtain first measurement data. The method further comprises a step S23 of performing a second measurement process on the target portion 32 of the layer 30 to obtain second measurement data. The method further comprises a step S24 in which the first and second measurement processes are performed for multiple different target portions 32 of the layer 30 to obtain a training dataset. The first and second measurement processes may also be performed for multiple different layers 30 (e.g. on multiple different respective substrates W).

In step S25, the training dataset obtained in step S24 is used to train a machine learning model. The training is such that the trained machine learning model is capable of deriving metrology information about a new target portion 32 (e.g. a target portion 32 that was not used to train the machine learning model) from measurement data obtained by performing the first measurement process on the new target portion 32.

In an embodiment, the first measurement process (performed in step S22) comprises illuminating each target portion 32 of the layer 30 with an incoherent beam of radiation and detecting radiation redirected by the target portion 32. The first measurement process may thus be performed using any of the techniques described above with reference to step S2 of Figure 4. The first measurement process may, for example, comprise obtaining a detected image formed in a dark field imaging mode. The detected image may, for example, be obtained using the sensor 23 in the optical apparatus of Figure 3.

In an embodiment, the first measurement process (performed in step S22) comprises obtaining a detected distribution of radiation in a pupil plane (e.g. in a bright field imaging mode). The detected distribution of radiation in a pupil plane may, for example, be obtained using the sensor 19 in the optical apparatus of Figure 3.

In an embodiment, the first measurement process (performed in step S22) comprises dark field holographic microscopy. The first measurement process may thus be performed using any of the techniques described above with reference to step S12 of Figure 6.

In some embodiments, the second measurement process is a process that is capable of providing more detailed information about defects of interest in the layer 30, such as grain boundaries, than the first measurement process. The second measurement process may, however, be more expensive and/or slower than the first measurement process. By training the machine learning model based on measurement data from both of the first and second measurement processes, the machine learning model learns to obtain more useful information from the measurement data obtained in the future only from the first measurement process. The machine learning model may for example learn how to correlate subtle features in the first measurement data with features confirmed to be defects of interest in the second measurement data. The machine learning model makes it possible for high quality information to be obtained from measurements of a new layer 30 that only use the first measurement process. High quality information can thus be obtained with high efficiency (e.g. low cost and/or high speed).

In an embodiment, the second measurement process comprises electron microscopy, such as scanning electron microscopy.

In an embodiment, the second measurement process comprises second-harmonic imaging microscopy. The second-harmonic imaging microscopy may be particularly effective for detecting defects of interest when the microscopy uses dark field imaging. The second-harmonic imaging microscopy may also use a detected distribution of radiation in a pupil plane. Second-harmonic imaging microscopy as a general technique is known in the art and could be implemented using a wide variety of optical configurations. The technique is based on using variations in an ability of the layer 30 to generate second-harmonic light to provide contrast in an image. Defects such as grain boundaries can be made to generate second-harmonic light differently (e.g. more) than regions of the layer 30 away from the defects. This effect can allow defects to be viewed more clearly than might be possible using conventional optical microscope techniques, which rely on detecting variations in optical density, path length or refractive index. In some embodiments, the second-harmonic imaging microscopy is implemented using an optical apparatus of the type discussed above with reference to Figure 3 except with the source 11 configured to be a coherent radiation source (e.g. a laser). When a dark-field imaging mode is used, this may be obtained using the sensor 23 in the optical apparatus of Figure 3. When a detected distribution of radiation in a pupil plane is used, this may be obtained using the sensor 19 in the optical apparatus of Figure 3. In some embodiments, an optical apparatus of the type discussed above with reference to Figure 3 is configured to operate in two different modes: the apparatus implements the first measurement process (e.g. using incoherent radiation) in a first mode and implements the second measurement process (e.g. using second-harmonic imaging microscopy) in a second mode. An example demonstration of dark-field second-harmonic imaging being used to detect grain boundaries in transition metal dichalcogenides (TMDs) is disclosed in the following paper: Nonlinear Dark-Field Imaging of One-Dimensional Defects in Monolayer Dichalcogenides"; Bruno R. Carvalho, Yuanxi Wang, Kazunori Fujisawa, Tianyi Zhang, Ethan Kahn, Ismail Bilgin, Pulickel M. Ajayan, Ana M. de Paula, Marcos A. Pimenta, Swastik Kar, Vincent H. Crespi, Mauricio Terrones, and Leandro M. Malard; Nano Letters 2020 20 (1), 284-291. In this study, dark-field second-harmonic imaging microscopy is used to obtain images of two-dimensional crystals of MoS₂, MoSe₂ and WS₂ formed as monolayers on quartz substrates. In the examples described, the samples were excited with an energy of 1.38 eV (900nm) for MoSe₂ and 1.42 eV (873nm) for MoS₂ and WS₂, respectively. A broad band laser of 750-950nm was used, but a narrower band laser, e.g. of 870-900nm, should be sufficient to pump second-harmonic generation in MoS₂, MoSe₂ and WS₂.

In some embodiments, the layer 30 that is used to obtain the training dataset is deliberately manipulated to provide a predefined variation in defect distribution. This approach can ensure that the training dataset trains the machine learning model effectively over a desired range of defect distributions without the training set having to be excessively large (which might otherwise be the case if the training relied on more random variations in defect distributions in the training set). In some embodiments, this is achieved by arranging for the layer 30 to be supported on a non-planar support surface, with a surface topography of the non-planar support surface being configured to provide a predetermined defect distribution in the layer 30. For example, it is expected that formation of grain boundaries will be favored at regions where a slope in the support changes quickly (e.g. along sharp convex ridges, etc.). Alternatively or additionally, in some embodiments the layer 30 that is used to obtain the training dataset is supported on a support surface having a non-uniform composition, with a spatial variation of the composition in the support surface being configured to provide a predetermined defect distribution in the layer 30. For example, as exemplified in Figure 9, the support surface 50 may be configured to provide a defect distribution that is substantially uniform in each of a plurality of different training zones 51-54, with the substantially uniform defect distribution being substantially different in each of the training zones 51-54. For example, the support surface 50 may be such that when the layer 30 is formed on the support surface 50, the composition of the training zones 51-54 is such that a lowest density of grain boundaries occurs in training zone 51, a higher density of grain boundaries occurs in training zone 52, a still higher density of grain boundaries occurs in training zone 53, and a highest density of grain boundaries occurs in training zone 54.

In some embodiments, the substrate is pre-processed to make it easier for defects such as grain boundaries to be distinguished. The pre-processing may be applied prior to any of the methods of performing metrology described above with reference to Figures 4 and 6. Alternatively or additionally, the pre-processing may be applied to enhance the training of the machine learning model in the methods described with reference to Figure 8. For example, the pre-processing could be applied as part of the second measurement process. The pre-processing may comprise chemically modifying the defects, for example by applying an oxidation process to selectively oxidize the defects (e.g. using heating and/or O₂ vapour). Alternatively or additionally, functionalization with self-assembled monolayers may be applied to enhance contrast between the defects and other regions of the two-dimensional material. Alternatively or additionally, an additional thin layer (e.g. a monolayer) may be applied over the layer 30 comprising the two-dimensional material to enhance contrast between the defects and other regions of the two-dimensional material.

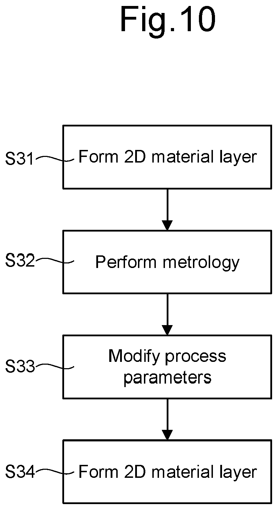

Figure 10 depicts a framework of a method of providing a layer 30 comprising a two-dimensional material on a substrate W, as depicted in Figure 5. The layer 30 may take any of the forms described above with reference to Figures 4-9. The method comprises a step S31 of forming a layer comprising a two-dimensional material on a substrate W using a formation process. The method further comprises a step S32 of performing metrology on the layer 30 using any of the methods described above with reference to Figures 4 and 6. The method further comprises a step S33 of modifying one or more process parameters of the formation process based on the obtained metrology information and a step S34 of repeating the formation process to form a layer comprising a two-dimensional material on a new substrate. The modified process parameters may comprise a parameter of a deposition process configured to deposit the two-dimensional material. Alternatively or additionally, the modified process parameters may comprise a parameter of a patterning process configured to impart a pattern to the two-dimensional material.

The embodiments may further be described using the following clauses:
1. A method of performing metrology, comprising:
   providing a substrate having a layer formed on the substrate, the layer comprising a two-dimensional material;
   illuminating a target portion of the layer with an incoherent beam of radiation and detecting radiation redirected by the target portion of the layer to obtain measurement data; and
   processing the measurement data to obtain metrology information about the target portion of the layer, wherein:
      the illuminating, detecting and processing are performed for plural different target portions of the layer to obtain metrology information for the plural target portions of the layer.
2. The method of clause 1, wherein the measurement data comprises data derived from a detected image formed in a dark field imaging mode.
3. The method of clause 1, wherein the measurement data comprises data derived from a detected distribution of radiation in a pupil plane.
4. The method of any preceding clause, wherein the illumination is performed using radiation having a wavelength in the range 10nm-1000nm.
5. A method of performing metrology, comprising:
   providing a substrate having a layer formed on the substrate, the layer comprising a two-dimensional material;
   performing dark field holographic microscopy on a target portion of the layer to obtain measurement data; and
   processing the measurement data to obtain metrology information about the target portion of the layer, wherein:
      the dark field holographic microscopy and processing are performed for plural different target portions of the layer to obtain metrology information for the plural target portions of the layer.
6. The method of any preceding clause, wherein at least a majority of the plural target portions are positioned within a distance from a radial periphery of the substrate nearest to the target portion that is less than 20% of an average separation between the radial periphery and a center of mass of the substrate.
7. The method of any preceding clause, wherein the plural target portions are all positioned closer to a nearest periphery of the substrate than to a centre of mass of the substrate.
8. The method of any preceding clause, wherein the plural target portions vary in size and/or shape as a function of position on the substrate.
9. The method of clause 8, wherein an average surface area of the target portions decreases monotonically as a function of increasing separation from a centre of mass of the substrate.
10. The method of any preceding clause, further comprising using a trained machine learning model to obtain the metrology information from the measurement data.
11. The method of any preceding clause, wherein the obtained metrology information comprises information about a defect distribution in the layer.
12. The method of clause 11, wherein the information about the defect distribution comprises information about a spatial distribution of grain boundaries.
13. The method of clause 12, wherein the information about the defect distribution comprises information about a spatial distribution of a density of grain boundaries.
14. The method of clause 12 or 13, wherein the processing of measurement data comprises using a pattern recognition algorithm or a segmentation algorithm to determine one or more of the following: a spatial distribution of a density of grain boundaries; a spatial distribution of a gradient in a density of grain boundaries.
15. The method of any of clauses 11 to 14, wherein the obtained information about the defect distribution comprises information about one or more of the following: variations in layer thickness; a distribution of islands of additional layers; a distribution of defects in a pattern formed in the two-dimensional material; a distribution of layer delamination.
16. The method of any preceding clause, further comprising using the obtained metrology information for the plural target portions of the layer to construct a map of metrology information over a region of the substrate covered by the plural portions of the layer.
17. A method of training a machine learning model, comprising:
   providing a substrate having a layer formed on the substrate, the layer comprising a two-dimensional material;
   performing a first measurement process on a target portion of the layer to obtain first measurement data; and
   performing a second measurement process on the target portion of the layer to obtain second
   measurement data, wherein:
      the first and second measurement processes are performed for multiple different target portions of the layer to obtain a training dataset; and
      using the obtained training dataset to train a machine learning model such that the trained machine learning model is capable of deriving metrology information about a new target portion of a layer comprising a two-dimensional material from measurement data obtained by performing the first measurement process on the new target portion.
18. The method of clause 17, wherein the first measurement process comprises illuminating each target portion of the layer with an incoherent beam of radiation and detecting radiation redirected by the target portion.
19. The method of clause 18, wherein the first measurement process comprises obtaining a detected image formed in a dark field imaging mode.
20. The method of clause 18, wherein the first measurement process comprises obtaining a detected distribution of radiation in a pupil plane.
21. The method of clause 17, wherein the first measurement process comprises dark field holographic microscopy.
22. The method of any of clauses 17 to 21, wherein the second measurement process comprises electron microscopy.
23. The method of any of clauses 17 to 22, wherein the second measurement process comprises second-harmonic imaging microscopy.
24. The method of clause 23, wherein the second-harmonic imaging microscopy uses dark field imaging.
25. The method of any of clauses 17 to 24, wherein the layer comprising the two-dimensional material used to obtain the training dataset is supported on a non-planar support surface, a surface topography of the non-planar support surface being configured to provide a predetermined defect distribution in the layer.
26. The method of any of clauses 17 to 25, wherein the layer comprising the two-dimensional material used to obtain the training dataset is supported on a support surface having a non-uniform composition, a spatial variation of the composition in the support surface being configured to provide a predetermined defect distribution in the layer.
27. The method of clause 25 or 26, wherein the support surface is configured to provide a defect distribution that is substantially uniform in each of a plurality of different training zones, the substantially uniform defect distribution being substantially different in each of the training zones.
28. The method of any of clauses 25 to 27, wherein the predetermined defect distribution comprises a predetermined distribution of grain boundaries.
29. The method of any of clauses 1 to 16, further comprising using a machine learning model to obtain the metrology information from the measurement data, wherein the machine learning model is trained according to the method of any of clauses 17 to 28.
30. A method for providing a layer comprising a two-dimensional material on a substrate, comprising:
   forming a layer comprising a two-dimensional material on a substrate using a formation process;
   performing metrology on the layer comprising the two-dimensional material using the method of any of clauses 1 to 16; and
   modifying one or more process parameters of the formation process based on the obtained metrology information and repeating the formation process to form a layer comprising a two-dimensional material on a new substrate.
31. The method of clause 30, wherein the modified process parameters comprise one or more of the following: a parameter of a deposition process configured to deposit the two-dimensional material; and a parameter of a patterning process configured to impart a pattern to the two-dimensional material.

Although specific reference may be made in this text to the use of lithographic apparatus in the manufacture of ICs, it should be understood that the lithographic apparatus described herein may have other applications, such as the manufacture of integrated optical systems, guidance and detection patterns for magnetic domain memories, flat-panel displays, liquid-crystal displays (LCDs), thin film magnetic heads, etc. The skilled artisan will appreciate that, in the context of such alternative applications, any use of the terms "wafer" or "die" herein may be considered as synonymous with the more general terms "substrate" or "target portion", respectively. The substrate referred to herein may be processed, before or after exposure, in for example a track (a tool that typically applies a layer of resist to a substrate and develops the exposed resist), a metrology tool and/or an inspection tool. Where applicable, the disclosure herein may be applied to such and other substrate processing tools. Further, the substrate may be processed more than once, for example in order to create a multi-layer IC, so that the term substrate used herein may also refer to a substrate that already contains multiple processed layers.

Although specific reference may have been made above to the use of embodiments of the invention in the context of optical lithography, it will be appreciated that the invention may be used in other applications, for example imprint lithography, and where the context allows, is not limited to optical lithography. In imprint lithography a topography in a patterning device defines the pattern created on a substrate. The topography of the patterning device may be pressed into a layer of resist supplied to the substrate whereupon the resist is cured by applying electromagnetic radiation, heat, pressure or a combination thereof. The patterning device is moved out of the resist leaving a pattern in it after the resist is cured.

The terms "radiation" and "beam" used herein encompass all types of electromagnetic radiation, including ultraviolet (UV) radiation (e.g., having a wavelength of or about 365, 355, 248, 193, 157 or 126 nm) and extreme ultra-violet (EUV) radiation (e.g., having a wavelength in the range of 5-20 nm), soft X-ray, as well as particle beams, such as ion beams or electron beams.

The term "lens," where the context allows, may refer to any one or combination of various types of optical components, including refractive, reflective, magnetic, electromagnetic, and electrostatic optical components.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A method of performing metrology, comprising:
providing a substrate having a layer formed on the substrate, the layer comprising a two-dimensional material;
illuminating a target portion of the layer with a beam of radiation and detecting radiation redirected by the target portion of the layer to obtain measurement data; and
processing the measurement data to obtain metrology information about the target portion of the layer, wherein:
the illuminating, detecting and processing are performed for plural different target portions of the layer to obtain metrology information for the plural target portions of the layer.

2. The method of claim 1, wherein the measurement data comprises data derived from a detected image formed in a dark field imaging mode.

3. The method of claim 1, wherein the measurement data comprises data derived from a detected distribution of radiation in a pupil plane.

4. The method of claim 1, wherein the illumination is performed using incoherent radiation having a wavelength in the range 10nm-1000nm.

5. A method of claim 1, wherein the illuminating and detecting are configured as dark field holographic microscopy and the processing are performed for plural different target portions of the layer to obtain metrology information for the plural target portions of the layer.

6. The method of claim 1, wherein at least a majority of the plural target portions are positioned within a distance from a radial periphery of the substrate nearest to the target portion that is less than 20% of an average separation between the radial periphery and a centre of mass of the substrate.

7. The method of claim 1, wherein the plural target portions vary in size and/or shape as a function of position on the substrate.

8. The method of claim 7, wherein an average surface area of the target portions decreases monotonically as a function of increasing separation from a centre of mass of the substrate.

9. The method of any preceding claim, wherein the obtained metrology information comprises information about a defect distribution in the layer.

10. The method of claim 9, wherein the information about the defect distribution comprises information about a spatial distribution of grain boundaries.

11. The method of claim 10, wherein the processing of measurement data comprises using a pattern recognition algorithm or a segmentation algorithm to determine one or more of the following: a spatial distribution of a density of grain boundaries; a spatial distribution of a gradient in a density of grain boundaries.

12. The method of claim 9, wherein the obtained information about the defect distribution comprises information about one or more of the following: variations in layer thickness; a distribution of islands of additional layers; a distribution of defects in a pattern formed in the two-dimensional material; a distribution of layer delamination.

13. The method of any preceding claim, further comprising using the obtained metrology information for the plural target portions of the layer to construct a map of metrology information over a region of the substrate covered by the plural portions of the layer.

14. The method of any of the preceding claims, further comprising using a machine learning model to obtain the metrology information from the measurement data, wherein a training method of the machine learning model comprises:
providing a substrate having a layer formed on the substrate, the layer comprising a two-dimensional material;
performing a first measurement process on a target portion of the layer to obtain first measurement data; and
performing a second measurement process on the target portion of the layer to obtain second measurement data, wherein:
the first and second measurement processes are performed for multiple different target portions of the layer to obtain a training dataset; and
using the obtained training dataset to train a machine learning model such that the trained machine learning model is capable of deriving metrology information about a new target portion of a layer comprising a two-dimensional material from measurement data obtained by performing the first measurement process on the new target portion..

15. A method for providing a layer comprising a two-dimensional material on a substrate, comprising:
forming a layer comprising a two-dimensional material on a substrate using a formation process;
performing metrology on the layer comprising the two-dimensional material using the method of any of claims 1-14; and
modifying one or more process parameters of the formation process based on the obtained metrology information and repeating the formation process to form a layer comprising a two-dimensional material on a new substrate.
